# EUROPEAN PATENT SPECIFICATION

(11) **EP 0 820 226 B1**
(45) Date of publication and mention of the grant of the patent: **09.06.2004**
(21) Application number: 96906137.3
(22) Date of filing: 04.03.1996
(51) Int. Cl.: A01N 31/02, A01N 37/02

(54) **COMBATTING PEST INSECTS**
BEKÄMPFUNG VON SCHADINSEKTEN
LUTTE CONTRE LES INSECTES NUISIBLES

(30) Priority: 03.03.1995 SE 9500774
(43) Date of publication of application: 28.01.1998
(73) Proprietor: Löfqvist, Jan, 245 92 Staffanstorp (SE); Witzgall, Peter, 224 71 Lund (SE); Bengtsson, Marie, 224 71 Lund (SE)
(72) Inventor: Löfqvist, Jan, 245 92 Staffanstorp (SE); Witzgall, Peter, 224 71 Lund (SE); Bengtsson, Marie, 224 71 Lund (SE)
(74) Representative: Hammond, Andrew
(86) International application number: PCT/SE1996/000275
(87) International publication number: WO 1996/027289

(56) References cited:
- EP-A- 0 236 188
- WO-A-80/03755
- US-A- 3 852 419
- STN INTERNATIONAL, File CAPLUS, CAPLUS Accession No. 1980:508912, BOGDANOVA T.P. et al., "Mechanism of the Inhibitory Effect of Cis-8-Dodecenyl Acetate on the Responses to the Sex Attractant Trans-8,10-Dodecadienol in Males of the Codling Moth Laspeyresia Pomonella"; & ZH. EVOL. BIOKHIM. FIZIOL., (1980), 16(3), 288-94.
- STN INTERNATIONAL, File CAPLUS, CAPLUS Accession No. 190:508901, BOGDANOVA T.P., "Prospects for the Use of Synthetic Apple Worm Attractant for the Protection of a Fruit Orchard"; & BIOL. AKT. VESHCHESTVA ZASHCH. RAST., (1979), 34-7.
- STN INTERNATIONAL, File CAPLUS, CAPLUS Accession No. 1986:202262, EINHORN, JACQUES et al., "Secondary Components of the Codling Moth (Cydia Pomonella L.), (Lepidoptera, Tortricidae) Sex Pheromone. II. First Results on the Behavioral Effects"; & C. R. ACAD. SCI., SER. 3, (1986), 302(7), 263-6.
- STN INTERNATIONAL, File CAPLUS, CAPLUS Accession No. 1975:52585, HATHAWAY D.O. et al., "Inhibitor of Sexual Attraction of Male Codling Moths to a Synthetic Sex Pheromone and Virgin Females in Traps"; & ENVIRON. ENTOMOL., (1974) , 3(3), 522-4.
- ANNUAL REVIEW OF ENTOMOLOGY, Volume 40, 1995, RING T. CARDE et al., "Control of Moth Pests by Mating Disruption: Successes and Constraints", pages 559-585.
- EINHORN J. ET AL R. ACAD. SCI. vol. 7, no. 302, 1986, pages 263 - 266
- HATHAWAY D.O. ET AL ENVIRON. ENTOMOL. vol. 3, no. 3, 1974, pages 522 - 524

## Description

### Technical field

The present invention relates to the use of a combination of the sex pheromone, E8,E10-dodecadien-l-ol, and a behaviour antagonist as defined in claim 1 for combating the codling moth, *Cydia pomonella,* in fruit orchards.

The object of the present invention is to obtain an efficient method for combating codling moth in fruit orchards by utilizing the sex pheromone of said insect in combination with a behaviour antagonist.

### Background of the invention

Biological methods of inhibiting pest insects have been faced with great interest during later years and in particular the use of pheromones, i.e. specie specific scent substances by means of which animals, such as insects, communicate and which substances trigger (provoke) a certain behaviour or a biological activity. Since several years pheromones are marketed for inhibiting certain pest insects on a commercial basis, as well. The advantage of using pheromones for this purpose is the very high selectivity and the very great environmental advantage. Contrary to chemical inhibiting agents the activity of the pheromones is directed solely towards the insect specie intended and as pheromones are substances that appear naturally they do not give rise to resistance problems. Pheromones are further, active in very small amounts and are biologically degradable. They are not toxic to any part of the ecological system.

Sex pheromones of butterflies (in particular night moths and torthricides) are the most well known sex pheromones. In one inhibiting method, the confusing method, the pheromone is spread from sources provided with a synthetic sex pheromone substance in such a way that the whole area will become reeking with the substance. The males will then not find the females to any greater extent. The method is efficient. The confusing method is today commercial with regard to a dozen moth species (Cardé & Minks, 1995, Ridgway et al, (1990), Behaviour-Modifying Chemicals for Pest Management: Applications of Pheromones and Other Attractants, New York, Marcel Dekker). The most important obstacles for a rapid development of the confusing technique are within the fields of biology and chemistry. One does simply not know how and why the confusing technique works.

The dominant hypothesis for the male pheromone attraction of the females was formulated in 1978 by Roelofs. It is called the threshold hypothesis and states that the complete and proportionally natural pheromone blend is always a better stimulus of the complete behaviour than any other blend of the components. It will also release the behaviour at lower concentrations than any other blend. The hypothesis has governed and still governs, in principle, all pheromone studies.

In a review of successful and commercial cases using confusion, Minks & Cardé conclude (1988), Entomol. Exp. Appl., 49:25-36 : "the natural blend achieves disruption of mating at lower application rates than either partial or off-ratio blends".

A sex pheromone may consist of up to 10 different, but biosynthetically closely related substances (Baker, (1989) Insect Flight, ed. G J Goldsworthy, C H Wheeler, Boca Raton, FL, CRC Press). Different species within a family utilize different combinations of such a theme. The specie separation can be strengthened by the fact that specie A has specific sensoric neurons for the main component of specie B as well, but responds with a negative, escaping behaviour on such a signal. As an example the pine hymenopteran of the family Neodiprion (Löfqvist, 1986) will be mentioned. The main component of the sex pheromone of N. sertifor has three chiral carbon atoms. The substance can thus appear in eight different enantiomers. Only one of them is active as a sex attractant. Another one thereof is a very strong behaviour antagonist. Only 1-2% of this together with the attractant is enough to completely block the attraction.

### Mating disruption

The importance of alternative methods of insect control is increasing due to problems with registration of toxic insecticides, insecticide resistance, environmental problems and consumer attitudes.

Insects use sex pheromones to communicate for mating. Pheromones elicit strong behavioural reactions at minute amounts, they are species-specific and non-toxic. By permeating the atmosphere with synthetic pheromones, olfactory communication and mate-finding can be prevented (Ridgway et al. 1990).

One main obstacle for further development of the mating disruption technique is that the behavioural mechanisms of mating disruption are still largely unknown. It is therefore unclear which blend of pheromonal compounds is the most efficient (Minks & Cardé 1988; Cardé & Minks 1995).

Insect sex pheromones consist of a blend of several compounds, which are attractive to conspecific males, but unattractive to males of other species. Species-specificity is central to pheromone-mediated mate finding. As most pheromone compounds co-occur in several, often closely related species, it is clear that specificity can only be achieved by blending several compounds (Roelofs 1978; Linn et al. 1986; Baker 1989).

### Pheromone synergists

A blend of the main pheromone compound (usually the most abundant compound in the female pheromone gland) plus further pheromone synergist elicits behaviours, which cannot be obtained with any single compound by itself. Each single compound can be part of the pheromone of another species, but the entire blend of compounds is species-specific. Addition of synergists also greatly enhances the overall behavioural activity of the blend vs. the main compound alone. Complete blends are more attractive than incomplete blends, and they often elicit behaviours such as landing and copulatory attempts at the source, which cannot be obtained with single compounds or incomplete blends. The blend (i.e. compounds released together, from one source), acts as a unit and has new behavioural properties; this is a main principle in pheromone biology (Linn et al. 1986; Baker 1989).

### Pheromone antagonists

Pheromone antagonists (previously termed "inhibitors") are "negative synergists". These are compounds, which strongly decrease male attraction, when blended with the main pheromone compound or the pheromone blend. As with pheromone synergists, the blend of pheromone plus antagonist amplifies the male response, acts as a unit, and has new behavioural properties compared to the single compounds alone; under the condition that both compounds are released from the same source. A blend of pheromone and antagonist can, for example, produce a repellent effect (Löfqvist 1986).

The combined action of synergists and antagonists results in species-specificity of pheromone signals. For example, pear moth *C. pyrivora*, a sibling species of *C*. *pomonella*, uses codlemone acetate as a pheromone.

STN international file CAPLUS, acc.no. 1980:508912, Bogdanova, T. P., et al, discloses that cis-8-dodecenyl acetate is a potent inhibitor of male attraction to traps baited with synthetic sex pheromone, trans-8,10-dodecadienol. This reference does not discuss what happens at confusion techniques.

STN international file CAPLUS, acc.no.190:508901, Bogdanova, T. P. discloses that placement of trapless codlemone baits on apple trees decreased the percentage of marked apple worm males attracted to traps baited with live females and placed on the same tree from 22.8 to 1.5%. In a laboratory test codlemone was placed in jars containing male and female apple worm couples decreased fertilization from 85 to 5%. Placing ampoules with cis-8-dodecenyl acetate into traps baited with codlemone or live female completely suppressed the attraction of apple worm males to the traps. This reference does not discuss what happens at confusion techniques.

STN international file CAPLUS, acc.no. 1986:202262 discloses that a minor amount of dodecanol increased codling moth upwind response to codlemone, E8,E10-dodecadien-1-ol, in wind tunnels, i.e. increased response to the sex pheromone. An addition of codlemone-acetate or dodecadien-8E,10Z-ol-1 abolished attraction to traps in apple and pear orchards. This reference does not discuss what happens at confusion techniques.

STN international file CAPLUS, acc.no. 1975:52585 discloses that codlemone-acetate, E8,E10-dodecadienyl acetate, inhibited attraction of male codling moths to traps containing either synthetic sex pheromone, codlemone, or to virgin female codling moths. This reference does not discuss what happens at confusion techniques.

EP-A-0 236 188 discloses a method for concurrently emitting vapours of sex pheromone of different insects into one dispenser in order to a more economic treatment of an orchard to catch or to disrupt mating of different insects infesting an orchard. This reference does not discuss what happens at confusion techniques when using sex pheromone and behaviour antagonists of the Insect pest to disrupt mating.

Annual Review of Entomology, Cardé & Minks, 40:559-585 (1995) relates to control of moth pests by mating disruption and relates in particular to pink bollworm, oriental fruit moth, the tomato pinworm as well as codling moth (*Cydia pomonella*). The reference further discusses different principles of mating disruption such as via diminution in responsiveness via either sensory adaptation or habituation; arrestment; shifting the rhythm of response; disarrangement of the fine-scale structure of the natural plume; camouflage of the plumes from calling females; competition between calling females and point sources of synthetic pheromone; imbalance of sensory inputs; and combination of pheromone mimics and insecticides. When it comes to codling moth Cardé & Minks state that most test with codling moths were successful using the sex pheromones, but the ones which were not successful have hindered ready acceptance of the method of disruption using the sex pheromones. It is apparent that prior used methods have not been successful and/or reproducible.

US-A-3,852,419 relates to the synthetic codlemone compound. The patent also includes the synthesis of relatively inactive cis-trans, cis-cis and trans-cis isomers. No use of the inactive isomers is given.

WO 88/03755 claims "inhibition" in the sense of "mating disruption", using codlemone plus one or two attraction synergists in the form of dodecanol or tetradecanol, respectively. The work of Bartell et al. (1988), and of Arn et al. (1985) is the base of this patent.

### Description of the present invention

It has now surprisingly been shown possible to be able to inhibit the codling moth, Cydia pomonella, by confusion by means of the use of the sex pheromone E 8,E10--dodecadien-l-ol in a combination with one or more behaviour antagonists of the codlemone acetate group as defined in claim 1.

Suitable behaviour antagonists are one or more of geometric isomers of 8,10-dodecadien-1-yl acetate, (E,Z)-, (Z,E)-, and (Z,Z)-8,10-dodecadien-1-yl acetate, the codlemone acetate group.

The codling moth, *Cydia pomonella*, lives in habitat with a great number of other species. The competition in the communication channel using pheromones has led to the fact that the main component of the sex pheromone of one specie simultaneously is a behaviour antagonist of another specie. A number of such are known with regard to the codling moth, but the effect of them together with the sex pheromone has never been investigated before. However, the confusing method based upon the own sex pheromone of the codling moth, has been developed into a commercial product (Charmillot, (1990); Pfeiffer, et al, (1993), Exp. Appl., 67:47-56, which product, however, has a restricted use to low population densities and high amounts of compound.

The main component of the sex pheromone of the codling moth, E8,E10-dodecadien-l-ol was identified already in 1971 by Roelofs et al, Science, 174:297-99. Several research groups then worked with the identification of the composition of the pheromone. A relatively complete composition was published by Einhorn et al (1984), C. R. Acad. Sci., 299:773-77, and Arn et al (1985), Experientia, 41:1482-84. Already Roelofs et al (1972) found that the EE-isomer of the geometric isomers was very attractive while the other three inhibited the attraction of this. The commercial product thus consequently consists of 99% EE-isomer.

The family Cydia consists of a great number of species. In many thereof, e.g. the pear moth, *Cydia pyrivora*, the main component of the sex pheromone is E8,E10--dodecadien-l-yl acetate, i.e. the same substance as of the codling moth, with the difference that the substance is present as an acetate ester, i.e. the end group is an acetate in stead of an alcohol. It has turned out that the acetate is a behaviour antagonist of the codling moth, which will be evident from the tests shown below.

The main sex pheromone compound of codling moth is codlemone (Roelofs et al. 1971). Further pheromonal compounds produced by codling moth females have been identified by Einhorn et al. (1984) and Am et al. (1985). Mating disruption of codling moth is today done with codlemone, or a blend of codlemone plus the behavioural synergists 12OH and 14OH. However, the method is efficient only at low population densities (Charmillot 1990; Pfeiffer et al. 1993).

It has now been shown that a ble d of codlemone (E8,E10-12OH) and the geometric isomers (E,Z),(Z,E) and (ZZ) of codlemone acetate can be used for mating disruption of codling moth, and that this blend is more efficient than codlemone alone.

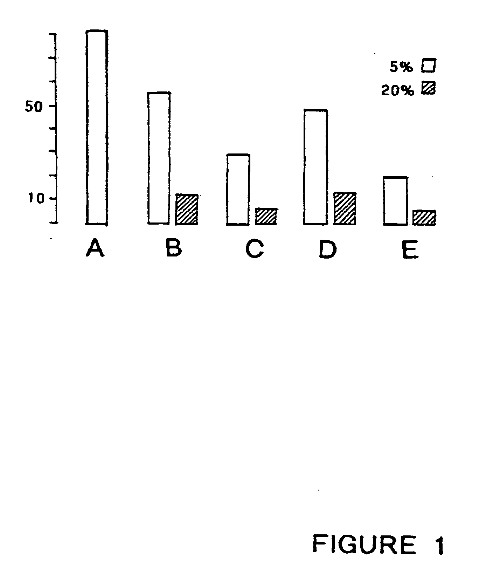

Pheromone traps were loaded with the pheromone, E8,E10-dodecadien-l-ol of the codling moth, (FIG 1 A). In other traps the alcohol was combined with the corresponding acetate in an amount of 5% and 20%, respectively (FIG 1 B) (the use of this combination is not part of the invention as claimed). At a blend of 20% of the acetate the catch decreased to 1/8 (dark column). In further tests the other three isomers (EZ (FIG 1 C), ZE (FIG 1 D), and ZZ (FIG 1 E)) (FIG 1C-1E) were tested. They were all behaviour antagonists to the codling moth. The ZZ-isomer was the most powerful of the four isomers.

In another test a confusion test was carried out in 100 m² quadratic test areas in a fruit orchard. In each test four dispensing means, loaded with a behaviour antagonist, were placed in each of the four corners of the respective test area. In the respective centre of each square a pheromone trap loaded with the sex pheromone, E8,E10-dodecadien-l-ol of the codling moth, was placed. The confusing effect was calculated as the number of males trapped in the trap compared with the number trapped in a trap in a non-treated control square, i.e. without any behaviour antagonist in the respective corner. Both the alcohol and the corresponding acetate had a strong confusing effect (the use of this combination is not part of the invention as claimed). However, the combination thereof had a clearly higher effect.

The own sex pheromone of the codling moth, the alcohol, is, as already mentioned, in commercial use. The inhibiting results are however, not always satisfying, Cardé & Minks, (1995), (Control of moth pests by mating disruption. Successes and constraints. Ann. Rev. Entomol., (1995), 40:559-585) in particular not in fruit orchards having high trees and a high population density. It has turned out that in such cases, the males are attracted to the treetops. Probably, the concentration of pheromone from located dispensing means is so low there, that the attracting power of the pheromone dominates its confusing effect. Males circulating in the treetops may also be caught in lower placed traps, which indicates a lacking confusing effect. However, if dispensing means in which the sex pheromone (the alcohol) is combined with a behaviour antagonist (acetate) is distributed around no males are observed flying around in the treetops. Several of the males caught in pheromone traps in such treated squares can be seen flying some metres above the ground and straight into the trap. They did never arrive from the top of the trees. The combination of the sex pheromone and a behaviour antagonist can thus be regarded a superior inhibiting method.

It is the blend of pheromone (codlemone) plus pheromone antagonist (codlemone acetate), which elicits these behavioural modifications. The combined action of pheromone plus pheromone antagonist is thus regarded superior for mating disruption, compared to pheromone alone.

### References

Arn H, Guerin PM, Buser H-R, Rauscher S, Mani E (1985) Sex pheromone blend of the codling moth, Cydia pomonella: evidence for a behavioural role of dodecan-1-ol. *Experientia* 41, 1482-1484

Baker TC (1989) Sex pheromone communication in the Lepidoptera: new research progress. *Experientia* 45, 248-262

Cardé RT, Minks AK (1995) Control of moth pests by mating disruption: successes and constraints. *Annu Rev Entomol* 40, 559-585

Charmillot P-J (1990) Mating disruption technique to control codling moth in Western Switzerland, pp. 165-182 in Ridgway RL, Silverstein RM, Inscoe MN (eds.). *Behavior-modifying Chemicals for Insect Management.* Marcel Dekker, New York

Einhorn J, Beauvais F, Gallois M, Descoins C, Causse R (1984) Constituants secondaires de la phéromone sexuelle du Carpocapse des Pommes, Cydia pomonella L. (Lepidoptera, Tortricidae). *C R Acad Sc Paris* 299(III), 773-778

Minks AK, Cardé RT (1988) Disruption of pheromone communication in moths: is the natural blend really most efficacious? *Entomol exp appl* 49, 25-36

Linn Jr CE, Campbell MG, Roelofs WL (1986) Male moth sensitivity to multicomponent pheromones: Critical role of female-released blend in determining the functional role of components and active space of the pheromone. *J chem Ecol* 12, 659-66

Löfqvist J (1986) Species specificity in response to pheromone substances in diprionid sawflies, pp. 123-129 in Payne TL, Birch MC, Kennedy CEJ (eds). *Mechanisms in Insect Olfaction*. Oxford University Press

Pfeiffer DG, Kaakeh W, Killian JC, Lachance MW, Kirsch P (1993) Mating disruption for control of damage by codling moth in Virginia apple orchards. *Entomol exp appl* 67, 57-64

Ridgway RL, Silverstein RM, Inscoe MN (1990) Behavior-modifying chemicals for insect management: applications of pheromones and other attractants. Marcel Dekker, New York

Roelofs WL (1978) Threshold hypothesis for pheromone perception. *J chem Ecol* 4, 685B699

Roelofs WL, Comeau A, Hill A, Milicevic G (1971) Sex attractant of the codling moth: Characterization with electroantennogram technique. *Science* 174, 297-299

## Claims

1. The use of sex pheromone (E,E)-8,10-dodecadienol blended with one or more behavioural antagonists consisting of geometric isomers of 8,10-dodecadien-1-yl acetate, (E,Z)-, (Z,E)-, and (Z,Z)-8,10-dodecadien-1-yl acetate, for population control of codling moth *Cydia pomonella* by the mating disruption method in fruit orchards.

2. The use according to claim 1, wherein the behaviour antagonist is present in an amount of 20 % by weight.

3. The use according to claim 1, wherein the behaviour antagonist is present in an amount of 5 % by weight.

## Patentansprüche

1. Verwendung des Sexpheromons (E,E)-8,10-Dodecadienol, gemischt mit einem oder mehreren Verhaltensantagonisten, bestehend aus geometrischen Isomeren von 8,10-Dodecadien-1-ylacetat, (E,Z)-, (Z,E)- und (Z,Z)-8,10-Dodecadien-1-ylacetat, zur Populationseindämmung der Obstmade *Cydia pomonella* durch das Paarungsstörverfahren in Obstplantagen.

2. Verwendung nach Anspruch 1, wobei der Verhaltensantagonist in einer Menge von 20 Gewichtsprozent vorhanden ist.

3. Verwendung nach Anspruch 1, wobei der Verhaltensantagonist in einer Menge von 5 Gewichtsprozent vorhanden ist.

## Revendications

1. Utilisation d'une phéromone sexuelle (E,E)-8,10-dodécadiénol mélangée à un ou plusieurs antagonistes comportementaux constitués d'isomères géométriques d'acétate de 8,10-dodécadiène-1-yle, d'acétate de (E,Z)-, (Z,E)-, et (Z,Z)-8,10-dodécadiène-1-yle, pour une gestion de population du carpocapse de la pomme *Cydia pomonella* par le procédé d'interruption d'accouplement dans des vergers.

2. Utilisation selon la revendication 1, dans laquelle l'antagoniste comportemental est présent selon une quantité de 20 % en poids.

3. Utilisation selon la revendication 1, dans laquelle l'antagoniste comportemental est présent selon une quantité de 5 % en poids.
